# EUROPÄISCHE PATENTANMELDUNG

(11) **EP 0 717 067 A1**
(43) Veröffentlichungstag der Anmeldung: **19.06.1996**
(21) Anmeldenummer: 95119060.2
(22) Anmeldetag: 04.12.1995
(51) Int. Cl.: C08J 7/12

(54) **Verfahren zur Oberflächenoxidation von Polyarylenthioethern**

(30) Priorität: 14.12.1994 DE 4444442
(71) Anmelder: HOECHST AKTIENGESELLSCHAFT, D-65929 Frankfurt am Main (DE)
(72) Erfinder: Scheckenbach, Helmut, Dr. Ing., D-63225 Langen (DE); Schleicher, Andreas, Dr., D-65614 Beselich (DE); von Eysmondt, Jörg, Dr., D-65719 Hofheim (DE); Frank, Georg, Dr., D-72074 Tübingen (DE)

(57) **Zusammenfassung**

Bei dem Verfahren zur Oberflächenoxidation von Polyarylenthioethern wird die Oberfläche des zu oxidierenden Materials mit einem ozonhaltigen Gas oder einer Flüssigkeit in Kontakt gebracht.

Die nach dem Verfahren hergestellten Materialien können im Flugzeugbau, Automobilbau und chemischen Apparatebau verwendet werden.

## Beschreibung

Die Erfindung betrifft ein Verfahren zur Oberflächenoxidation von Formteilen, Granulaten oder Pulver aus Polyarylenthioethern mittels Ozon zur Erhöhung der Temperatur- und Chemikalienbeständigkeit.

Polyarylenthioether sind bekannt. Sie besitzen neben einer guten Temperaturbeständigkeit auch eine gute Chemikalienbeständigkeit. Für viele Anwendungen ist jedoch eine höhere Temperaturbeständigkeit oder eine bessere Chemikalienbeständigkeit erforderlich. Dies kann erreicht werden z. B. durch Oxidation der Polyarylensulfid-Polymerketten zu Polyarylensulfoxid oder -sulfon, (DE-A 43 14 735, DE-A 43 14 736, DE-A 43 14 737). Nachteilig ist jedoch, daß solche Polymere auf herkömmlichem Wege durch Spritzguß oder Extrusion im allgemeinen nicht mehr thermoplastisch verarbeitbar sind.

Für viele Anwendungen ist es ausreichend, nur die Oberfläche der Formkörper zu oxidieren. Die Oberflächenoxidation mittels Wasserstoffperoxid und Essigsäure bzw. Methylenchlorid und m-Chlorbenzoesäure ist bekannt (A. Kaul und K. Udipi; Macromolecules 1989, 22, 1201-1207). Allgemein wird die Oberflächenoxidation von Polyarylensulfiden mittels Reagenzien in US-A 4,251,575; US-A 0,051,690; US-A 4,377,660 beschrieben. Außerdem ist die Oberflächenoxidation von ultra-dünnen Folien mittels Plasmabehandlung bekannt (JP 88-200838).

Die Oberflächenoxidation mittels Reagenzien ist zeitaufwendig und erfordert spezielle Reaktionsgefäße. Zudem müssen die Reagenzien nach der Oxidation entsorgt werden. Die Plasmabehandlung erfordert einen hohen apparativen Aufwand.

Aufgabe der Erfindung war es, die genannten Nachteile zu vermeiden.

Dies wurde gelöst durch die Verwendung von Ozon als Oxidationsmittel.

Die Erfindung betrifft ein Verfahren zur Oberflächenoxidation eines Polyarylenthioethers, bei dem die Oberfläche des zu oxidierenden Materials mit einem ozonhaltigen Gasstrom oder einer Flüssigkeit, in der Ozon gelöst ist, in Kontakt gebracht wird. Die eingesetzten Materialien sind z.B. Formteile, Granulate oder Pulver. Hierbei findet eine Oxidation der Polyarylenthioether an der Oberfläche des Feststoffs statt. Je nach Ozonkonzentration werden die Schwefelbrücken der Polyarylenthioether zum Sulfoxid und/oder zum Sulfon oxidiert. Ein höherer Oxidationsgrad ist hierbei gleichbedeutend mit einer höheren Temperatur- und Chemikalienbeständigkeit.

Dieses Verfahren stellt eine einfache, schnelle und preisgünstige Methode zur Oberflächenoxidation von Polyarylenthioethern dar.

Die Oberflächenoxidation kann in Gasen, vorzugsweise in Ozon/Sauerstoff-Gemischen oder Ozon/Luft-Gemischen sowie in Flüssigkeiten, insbesondere mit in Wasser bzw. in Essigsäure verschiedener Konzentrationen, vorzugsweise 10 bis 100 %, gelöstem Ozon, erfolgen.

Eine Oberflächenoxidation kann mit jeder Ozonkonzentration erreicht werden, insbesondere sind Ozonkonzentrationen von 1 g/m³ bis 200 g/m³ geeignet. Ozonkonzentrationen < 1g/m³ führen zu langen Zeiten. Bei Ozonkonzentrationen > 200 g/m³ besteht die Gefahr der Selbstexplosion von Ozon.

Verwendbare Polymere sind lineare und/oder verzweigte Polyarylensysteme mit der wiederkehrenden Einheit der Formel (I), die mindestens eine Thioethergruppe enthalten,

-[(Ar¹)ₙ-X]ₘ-[(Ar²)ᵢ-Y]ⱼ-[(Ar³)ₖ-Z]ₗ-[(Ar⁴)ₒ-W]ₚ- (I)

wobei Ar¹, Ar², Ar³, Ar⁴, W, X, Y und Z unabhängig voneinander gleich oder verschieden sind. Die Indizes n, m, i, j, k, l, o und p sind unabhängig voneinander Null oder ganze Zahlen 1, 2, 3 oder 4, wobei ihre Summe mindestens 2 ergeben muß. Ar¹, Ar², Ar³ und Ar⁴ stehen in der Formel (I) für Arylensysteme mit 6 bis 18 C-Atomen. W, X, Y und Z stellen zweiwertige Verknüpfungsgruppen dar, ausgewählt aus -SO₂-, -S-, -SO-, -CO-, -CO₂-, Alkylen- oder Alkylidengruppen mit 1 bis 6, vorzugsweise 1 bis 4 C-Atomen.

Geeignete Polymere sind beispielsweise Polyarylenthioether mit wiederkehrenden Einheiten der Formeln (II)-(VI), deren Synthesen z. B. in Chimia 28 (1974), 567 beschrieben sind: 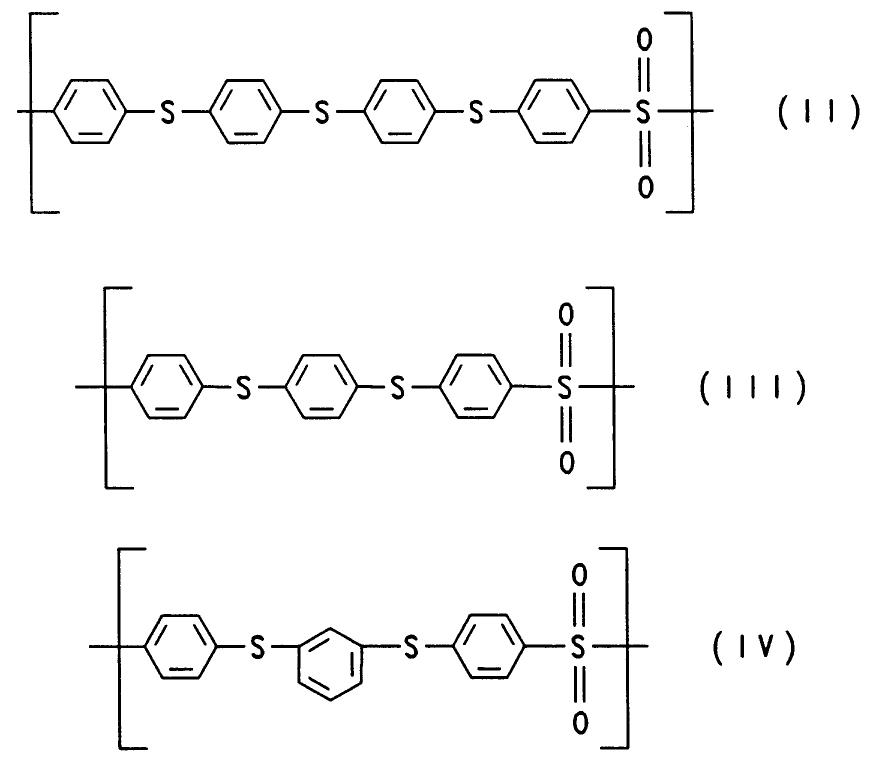 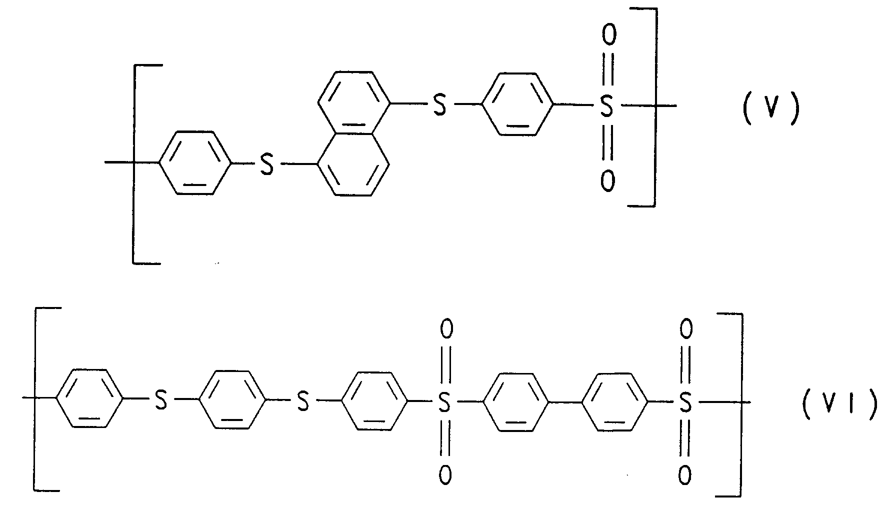
sowie Polyarylenthioether mit wiederkehrenden Einheiten der Formel (VII) (US-A-4,016,145).

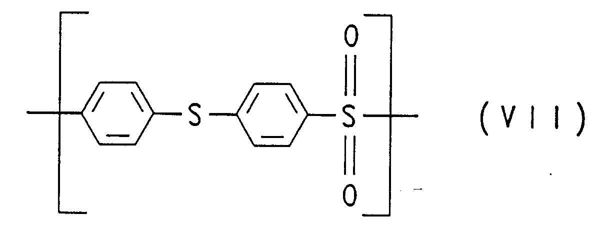

Bevorzugt als Polyarylenthioether ist Polyphenylensulfid (PPS) mit der wiederkehrenden Einheit der Formel (VIII) (siehe Ullmann's Encyclopedia of Industrial Chemistry, Vol. A21, Weinheim-New York 1992, S. 463).

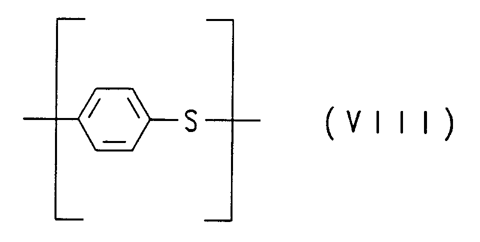

Für die Erfindung sind im allgemeinen Polyarylenthioether geeignet, die ein mittleres Molekulargewicht M_{w} von 4 000 bis 200 000, vorzugsweise von 10 000 bis 150 000, insbesondere 25 000 bis 100 000, bestimmt durch GPC, aufweisen.

Die Polyarylenthioether können auch pulverförmige Verstärkungsmittel, wie Kreide, Talk, Ton, Glimmer, und/oder faserförmige Verstärkungsmittel, wie Glas- und Kohlenstoffasern, Whiskers, sowie weitere übliche Zusatzstoffe und Verarbeitungshilfsmittel, z. B. Gleitmittel, Trennmittel, Antioxidantien, UV-Stabilisatoren, enthalten. Verwendung finden derartige Teile im Flugzeug- und Automobilbau sowie im chemischen Apparatebau.

### Beispiele:

### 1. Oberflächenoxidation von Formteilen

Allg. Versuchsbedingungen:
- Ozonerzeugung aus trockenem Sauerstoff mit handelsüblichem Ozon-Generator (Fischer 503, Fa. Fischer Labortechnik, Meckenheim, Bundesrepublik Deutschland) über stille elektrische Entladung. Ozon-Analyse (Eingang/Ausgang Reaktor) Über Ozon-Analysator Fischer Ozotron 23.
- Materialproben wurden in Glasrohr gegeben, das von beiden Seiten mit einer Fritte verschlossen werden konnte. Glasrohr wurde anschließend mit ozonhaltigem Sauerstoff durchströmt.
- Oberflächenanalyse der Materialproben erfolgte über ESCA (Electron Spectroscopy for Chemical Analysis)
Als Polyarylensulfid wurde ein Polyphenylensulfid mit einem Molekulargewicht M_{w} von ca. 90 000 g/mol, verwendet.

| Beispiel | 1a | 1b |
|---|---|---|
| | PPS-Rohr (Durchmesser: 80 mm, Wanddicke: 3 mm) | PPS-Stab (80*10*4 mm) |
| PPS-Einwaage [g] | 3 | 4 |
| Ozon-Eingang [mg/m³] | 40 000 | 35 000 |
| Ozon-Ausgang [mg/m³] | 39 300 | 34 400 |
| Ozon-Aufnahme [g] | 0,07 | 0,09 |
| Volumenstrom [m³/h] | 0,05 | 0,05 |
| Temperatur [°C] | 25 | 25 |
| Versuchsdauer [h] | 2 | 3 |
| Oberflächenzusammensetzung vor Ozonbehandlung [Atom %] | 100 % PPS | 100 % PPS |
| | 0 % PPSO | 0 % PPSO |
| | 0 % PPSO₂ | 0 % PPSO₂ |
| Oberflächenzusammensetzung nach Ozonbehandlung [Atom %] | 19,7 % PPS | 14,3 % PPS |
| | 26,5 % PPSO | 29,0 % PPSO |
| | 53,9 % PPSO₂ | 56,7 % PPSO₂ |

### 2. Eigenschaften der oberflächenoxidierten Formkörper

PPS-Stäbe nach Beispiel 1b im unbehandelten und oberflächenoxidierten Zustand wurden folgender Chemikalienlagerung unterzogen:

| | unbehandelt | oberflächenoxidiert |
|---|---|---|
| Schwefelsäure (20 %ig) bei 180°C über 96 h | - | + |
| Salpetersäure (86 %ig) bei 23°C über 1 h | - | + |
| Toluol bei 150°C über 24 h | - | + |
| Glykol (50 %ig) bei 180°C über 96 h | - | + |
| + : widerstandsfähig, Gewichtszunahme < 3 % oder Gewichtsverlust < 0,5 % und/oder Abnahme der Reißfestigkeit < 15 % /: bedingt widerstandsfähig, Gewichtszunahme 3 bis 8 % oder Gewichtsverlust 0,5 bis 3 % und/oder Abnahme der Reißfestigkeit 15 bis 30 % -: nicht widerstandfähig, Gewichtszunahme > 8 % oder Gewichtsverlust > 3 % und/oder Abnahme der Reißfestigkeit > 30 %. | | |

Ferner wurden PPS-Stäbe nach Beispiel 1b im unbehandelten und oberflächenoxidierten Zustand einer kurzzeitigen Temperaturbelastung ausgesetzt, wie sie typischerweise bei Lötvorgängen stattfindet:

Parameter: 30 mal pro Stunde 260°C über 5 Sekunden.

Es wurde beobachtet, daß die unbehandelten PPS-Stäbe an der Oberfläche angeschmolzen sind, während das oberflächenoxidierte PPS keine Veränderung aufwies.

### 3. Oxidation von Granulaten und Pulvern

Allg. Versuchsbedingungen:
- Ozonerzeugung aus trockenem Sauerstoff mit handelsüblichem Ozon-Generator (Fischer 503, Fa. Fischer) über stille elektrische Entladung
- PPS-Granulat (1 mm Korngröße, Siebfraktion) wurde in Doppelmantel-Glasreaktor (1,5 l) gegeben und über Wendelrührer trocken durchmischt. Anschließend erfolgte der Ozon-Eintrag über ein Bodenventil im Reaktor. Der Reaktormantel wurde auf 5°C gekühlt.
- PPS-Pulver (20 µm Korngröße) wurde im gleichen Reaktor in 50 %iger wäßriger Essigsäure suspendiert und intensiv mit einem Blattrührer gerührt. Anschließend erfolgte der Ozon-Eintrag über ein Bodenventil im Reaktor. Der Reaktormantel wurde auf 5°C gekühlt. Eingangs- und Ausgangs-Konzentrationen an Ozon wurden über handelsübliche Analysengeräte (Fischer Ozotron 23, Fa. Fischer) gemessen.

Oberflächenanalyse der Materialproben erfolgte über ESCA. Bei den Granulaten wurde einmal die reine Oberflächenoxidation der 1 mm Körner gemessen, zum anderen erfolgte eine Bestimmung des Gesamtoxidationsgrades, indem die Körner fein zermahlen und anschließend vermessen wurden.

| Beispiel | 3a | 3b |
|---|---|---|
| | PPS-Granulat (1 mm) | PPS-Pulver (0,02 mm) |
| Suspensionsmedium/ Lösungsmittel | - | 50 % wäßr. Essigsäure |
| Rührdrehzahl [U/min] | 200 | 500 |
| Einwaage PPS [g] | 400 | 216 |
| Ozon-Eingang [mg/m³] (Mittelwert) | 52 000 | 55 000 |
| Ozon-Ausgang [mg/m³] (Mittelwert) | 3 000 | 15 000 |
| Volumenstrom [m³/h] | 0,1 | 0,05 |
| Ozon-Aufnahme [g] | 130 | 52 |
| Temperatur [°C] | 10-20 | 5-10 |
| Versuchsdauer [h] | 2 | 3 |
| Oberflächenzusammensetzung vor Ozonbehandlung [Atom %] | 100 % PPS | 100 % PPS |
| | 0 % PPSO | 0 % PPSO |
| | 0 % PPSO₂ | 0 % PPSO₂ |
| Oberflächenzusammensetzung nach Ozonbehandlung [Atom %] | 22,1 % PPS | 10,5 % PPS |
| | 27,7 % PPSO | 74,4 % PPSO |
| | 50,2 % PPSO₂ | 15,1 % PPSO₂ |

## Patentansprüche

1. Verfahren zur Oberflächenoxidation eines Polyarylenthioethers, dadurch gekennzeichnet, daß die Oberfläche des zu oxidierenden Materials mit einem ozonhaltigen Gasstrom oder einer ozonhaltigen Flüssigkeit in Kontakt gebracht wird.

2. Verfahren nach Anspruch 1, dadurch gekennzeichnet, daß Ozon/Sauerstoff- oder Ozon/Luftgemische eingesetzt werden.

3. Verfahren nach Anspruch 1, dadurch gekennzeichnet, daß die Flüssigkeit Wasser oder Essigsäure enthält.

4. Verfahren nach einem oder mehreren der Ansprüche 1 bis 3, dadurch gekennzeichnet, daß die Ozonkonzentration 1 g/m³ bis 200 g/m³ beträgt.

5. Verfahren nach einem oder mehreren der Ansprüche 1 bis 4, dadurch gekennzeichnet, daß die Schwefelbrücken des Polyarylenthioethers zum Sulfoxid und/oder zum Sulfon oxidiert werden.

6. Verfahren nach einem oder mehreren der Ansprüche 1 bis 5, dadurch gekennzeichnet, daß der Polyarylenthioether ein lineares und/oder verzweigtes Polyarylensystem mit der wiederkehrenden Einheit der Formel (I) ist, die mindestens eine Thioethergruppe enthalten,
-[(Ar¹)ₙ-X]ₘ-[(Ar²)ᵢ-Y]ⱼ-[(Ar³)ₖ-Z]ₗ-[(Ar⁴)ₒ-W]ₚ- (I)
wobei Ar¹, Ar², Ar³, Ar⁴, W, X, Y und Z unabhängig voneinander gleich oder verschieden sind, die Indizes n, m, i, j, k, l, o und p sind unabhängig voneinander Null oder ganze Zahlen 1, 2, 3 oder 4, wobei ihre Summe mindestes 2 ergeben muß, Ar¹, Ar², Ar³ und Ar⁴ stehen in der Formel (I) für Arylensysteme mit 6 bis 18 C-Atomen, W, X, Y und Z stellen zweiwertige Verknüpfungsgruppen dar, ausgewählt aus -SO₂-, -S-, -SO-, -CO-, -CO₂-, Alkylen- oder Alkylidengruppen mit 1 bis 6, vorzugsweise 1 bis 4 C-Atomen.

7. Verfahren nach Anspruch 6, dadurch gekennzeichnet, daß Polyphenylensulfid eingesetzt wird.

8. Verfahren nach einem oder mehreren der Ansprüche 1 bis 7, dadurch gekennzeichnet, daß der Polyarylenthioether ein mittleres Molekulargewicht M_{w} von 4 000 bis 200 000, vorzugsweise von 10 000 bis 150 000, insbesondere 25 000 bis 100 000, bestimmt durch GPC, aufweist.

9. Verwendung der nach dem Verfahren gemäß Ansprüchen 1 bis 8 hergestellten Materialien im Flugzeug- und Automobilbau sowie im chemischen Apparatebau.
